# EUROPÄISCHE PATENTANMELDUNG

(11) **EP 3 339 636 A1**
(43) Veröffentlichungstag der Anmeldung: **27.06.2018**
(21) Anmeldenummer: 16206090.9
(22) Anmeldetag: 22.12.2016
(51) Int. Cl.: F03D 13/20, E04H 12/08, B23D 45/00, B23D 45/12

(54) **STAHLTURM FÜR EINE WINDENERGIEANLAGE SOWIE EIN VERFAHREN ZU DESSEN HERSTELLUNG**

(71) Anmelder: Nordex Energy GmbH, 22419 Hamburg (DE)
(72) Erfinder: Türk, Ibrahim, 22769 Hamburg (DE)
(74) Vertreter: Hauck Patentanwaltspartnerschaft mbB

(57) **Zusammenfassung**

Stahlturm für eine Windenergieanlage, der eine Mehrzahl von zylindrischen und/oder konischen in Turmlängsrichtung übereinander angeordneten Turmsektionen umfasst, welche mittels horizontal verlaufender Ringflansche miteinander verbunden sind, wobei wenigstens eine Turmsektion mindestens zwei Sektionsabschnitte umfasst, die entlang ihrer aneinander angrenzenden, horizontalen und ringförmigen Stirnseiten zusammengeschweißt sind und entlang der freien obersten und untersten Stirnseite jeweils mit einem horizontalen Ringflansch verschweißt sind und wobei die wenigstens eine Turmsektion in mehrere Sektionssegmente unterteilt ist, die durch Längsprofile und Verbindungsmittel zu einer umlaufenden Turmsektion miteinander verbunden sind, dadurch gekennzeichnet, dass mindestens einer der Ringflansche wenigstens zwei Teilungsabschnitte aufweist, in denen der Ringflansch in Ringflanschsegmente teilbar ist, wobei der mindestens eine Ringflansch vor einer Trennung der Sektionssegmente einen einstückigen Ringflansch bildet.

## Beschreibung

Die Erfindung betrifft Stahltürme für Windenergieanlagen, die aus einer Mehrzahl von übereinander angeordneten und miteinander verbundenen Turmsektionen gebildet sind, von denen wenigstens eine Turmsektion aus Sektionssegmenten besteht. Ebenso betrifft die Erfindung ein Verfahren zur Herstellung solcher Stahltürme.

Mit zunehmendem Bedarf an Windenergieanlagen mit höherer Leistung und somit größeren Abmessungen der Hauptkomponenten, wie Turm, Gondel und Rotorblätter, wurden die zulässigen Grenzen für Fahrzeugabmessungen, insbesondere die maximale Höhe von 4 Metern erreicht. Auch die durch die logistische Infrastruktur gegeben Grenzen, z. B. lichte Höhe unter Brücken, machen es erforderlich, Turmsektionen mit mehr als etwa 4 Metern Durchmesser in mehrere Teile zu teilen.

Das Gebrauchsmuster DE 203 21 855 U1 beschreibt einen Stahlturm für eine Windenergieanlage, der eine Anzahl von zylindrischen oder konischen Turmabschnitten umfasst, wobei zumindest seine breiteren Abschnitte in zwei oder mehr längliche Schalensegmente unterteilt sind, die sich mittels vertikaler Flansche, die aneinander durch eine Vielzahl von Bolzen befestigt sind, zu einem vollständigen Turmabschnitt vereinigen, wobei die Schalen auch mit oberen bzw. unteren horizontalen Flanschen versehen sind, um eine Verbindung der Turmabschnitte aufeinander zu ermöglichen.

Die Patentanmeldung DE 10 2007 018 025 A1 zeigt einen Windenergieanlagenturm mit einer tragenden Turmaußenwand, welche eine umlaufende, äußere Begrenzungsfläche aufweist und aus einer Vielzahl von Wandabschnitten besteht, die jeweils einen Mittelabschnitt und zwei in Längsrichtung des Turms verlaufende Randabschnitte aufweisen, die mit einer Vielzahl von Verbindungsbohrungen versehen sind, wobei die von den Randabschnitten definierten Flächen entlang der äußeren Begrenzungsfläche oder in konstantem Abstand dazu verlaufen und die Verbindungsbohrungen quer zu der äußeren Begrenzungsfläche ausgerichtet sind.

Aus der DE 10 2010 039 796 A1 ist ein Turm mit einem Adapterstück sowie ein Verfahren zur Herstellung eines Turmes bekannt, wobei hier eine untere rohrförmige Turmsektion aus Beton und eine obere rohrförmige Turmsektion aus Stahl vorgesehen ist. Derartige Hybridtürme werden derzeit für die Errichtung besonders hoher Windenergieanlagentürme bevorzugt, da mit dem Betonunterbau große Durchmesser möglich sind und auf die Unterbautürme in dieser Weise herkömmliche Windenergieanlagentürme oben aufgesetzt werden können, um größere Höhen und damit eine bessere Windausbeute zu erreichen.

Aus der WO 2015/161858 A1 ist ein Verfahren zur Herstellung einer Turmsektion für den Turm einer Windenergieanlage bekannt, bei dem die Turmsektion in Turmlängsrichtung in Sektionssegmente unterteilt ist. Die Sektionssegmente werden zunächst durch Durchtrennen der Turmwand erzeugt und später mit Hilfe von Flanschen wieder miteinander verbunden.

Es ist Aufgabe der Erfindung, einen Stahlturm für eine Windenergieanlage sowie ein Verfahren zu dessen Herstellung bereitzustellen, das mit einfachen Mitteln eine präzise Herstellung des Stahlturms aus segmentierten Turmsektionen ermöglicht.

Gemäß der Erfindung wird diese Aufgabe gelöst durch einen Stahlturm mit den Merkmalen aus Anspruch 1 und ein Herstellungsverfahren mit den Merkmalen aus Anspruch 8. Vorteilhafte Ausgestaltungen bilden den Gegenstand der Unteransprüche.

Der erfindungsgemäße Stahlturm für eine Windenergieanlage umfasst eine Mehrzahl von zylindrischen und/oder konischen Turmsektionen, welche mittels horizontaler Ringflansche miteinander verbunden sind, wobei wenigstens eine Turmsektion mindestens zwei Sektionsabschnitte umfasst, die entlang ihrer horizontalen ringförmigen Stirnseiten zusammengeschweißt und entlang der freien obersten und untersten Stirnseite mit horizontalen Ringflanschen verschweißt sind. Wenigstens eine Turmsektion ist in mehrere längliche, vorzugsweise in drei Sektionssegmente unterteilt, die durch vertikale Längsprofile und Verbindungsmittel, vorzugsweise Schraubverbindungen, zu einer vollständigen Turmsektion miteinander verbunden sind. Die Ringflansche sind an vorbestimmten Positionen in wenigstens zwei, vorzugsweise in drei Ringflanschsegmente geteilt, hierzu sind Teilungsabschnitte an der vorbestimmten Position vorgesehen. Die Teilung der Ringflansche an den Teilungsabschnitten in Ringflanschsegmente erfolgt gemeinsam mit dem Teilen der Turmsektion in Sektionssegmente. Der Teilungsabschnitt kennzeichnet sich durch eine geringere Materialstärke gegenüber dem restlichen Ringflansch. Die der Erfindung zu Grunde liegende Aufgabe wird dadurch gelöst, dass wenigstens eine Turmsektion in mehrere Sektionssegmente unterteilt ist ebenso wie der Ringflansch, wobei die Teilung des Ringflansches im Bereich seiner Teilungsabschnitte erfolgt. Die Turmsektionen sind dabei jedoch nicht auf zwei oder drei Sektionssegmente oder Ringflanschsegmente begrenzt, vielmehr sind auch Turmsektionen umfasst, die vier oder mehr Sektionssegmente und Ringflanschsegmente aufweisen.

Gemäß der Erfindung wird die Aufgabe auch durch ein Verfahren nach Anspruch 8 gelöst. Das erfindungsgemäße Verfahren dient zum Herstellen eines Stahlturms für eine Windenergieanlage, beginnend mit dem Schritt zum Herstellen einer ersten Turmsektion. Stahlblech wird im Wesentlichen ringförmig gebogen und entlang einer Längskante zu einem geschlossenen Sektionsabschnitt verschweißt. Eine Mehrzahl von im Querschnitt ringförmigen Sektionsabschnitten wird entlang gemeinsamer in Umfangsrichtung verlaufender und angrenzender ringförmiger Stirnflächen zu einem sich längs erstreckenden Rohrkörper verschweißt, wobei zur Bildung einer Turmsektion an die kreisringförmigen Stirnflächen des Rohrkörpers und/oder an eine kreisringförmige Stirnfläche eines Sektionsabschnitts jeweils ein geschlossener Ringflansch in einer, auf die Umfangsrichtung bezogen, vorbestimmten Lage angeschweißt wird. Der Ringflansch weist an vorbestimmten Positionen einen reduzierten Querschnitt als Teilungsabschnitt auf und die vorbestimmten Positionen fallen mit geplanten Trennlinien der Sektionssegmente zusammen bzw. fluchten mit diesen. Der Teilungsabschnitt wird an der Trennlinie angeordnet.

In einer vorteilhaften Ausbildung der Erfindung umfasst jedes Sektionssegment einer Turmsektion an der oberen Stirnseite und an der unteren Stirnseite ein Ringflanschsegment, wobei bevorzugt die Bogenlänge des unteren Ringflanschsegments gleich, größer oder kleiner der Bogenlänge des oberen Ringflanschsegments ist.

In einer vorteilhaften Weiterbildung der Erfindung ist wenigstens ein Ringflansch als T-Ringflansch ausgebildet, welcher einen kreisringförmigen Flanschabschnitt umfasst, der eine Vielzahl von Durchgangsbohrungen aufweist, die beidseitig eines zentralen Stegs des T-Ringflansches in wenigsten zwei konzentrischen Lochkreisen angeordnet sind. An wenigstens zwei vorbestimmten, vorzugsweise drei, vorbestimmten Positionen ist der Querschnitt des noch nicht geteilten T-Ringflansches durch jeweils zwei Schlitze reduziert, um im nicht geteilten Zustand des Ringflansches die Teilungsabschnitte zu bilden.

In einer besonders bevorzugten Ausgestaltung erstrecken sich ein erster Schlitz vom äußeren Umfang des kreisringförmigen Flanschabschnitts radial nach innen und ein zweiter Schlitz vom inneren Umfang des kreisringförmigen Flanschabschnitts radial nach außen, sodass lediglich eine schmale, aber hinreichend steife Segmentverbindung in Verlängerung des Stegs als Teilungsabschnitt verbleibt.

In einer vorteilhaften Weiterbildung der Erfindung ist wenigstens ein Ringflansch als L-Ringflansch ausgebildet, welcher einen kreisringförmigen horizontalen Flanschabschnitt umfasst, der eine Vielzahl von Durchgangsbohrungen aufweist, die auf einem Lochkreis liegen, und einen kreisringförmigen vertikalen Flanschabschnitt umfasst, wobei an wenigstens zwei, vorzugsweise drei vorbestimmten Positionen der Querschnitt des kreisringförmigen horizontalen Flanschabschnitts im noch nicht geteilten Zustand durch jeweils einen Schlitz als Teilungsabschnitt reduziert ist. Der horizontale Flanschabschnitt kann auch als Steg angesehen werden.

Eine bevorzugte Anordnung zur Verbindung einer ersten Art Längsprofile, insbesondere in Form von U-, C- oder Hut-Profilen mit der Rohrwandung der Turmsektion erfolgt derart, dass die Längsprofile mit einem Steg zur Innenwandung einer Turmsektion gerichtet angeschweißt sind. Die Anzahl der parallelen Längsprofile in einer horizontalen Ebene ist dabei gleich der Anzahl der Sektionssegmente einer Turmsektion.

Bei dem erfindungsgemäßen Gebrauch eines zum Inneren des Turmes hin offenen C-Profils, bei dem zwei nach innen gebogene rechtwinklige Verlängerungen der Schenkel einander zugewandt sind und deren Abstand im Wesentlichen der Breite des Schlitzes im Steg entspricht, ergibt sich der weitere Vorteil, dass - bei einer späteren Montage der Sektionssegmente - Distanzelemente verzichtbar sind, da besagte Verlängerungen mittels Schraubverbindungen gegeneinander gezogen werden und somit die Funktion der Distanzelemente übernehmen, wodurch sich eine vorteilhafte Reduzierung der Montagezeiten am Montageort ergibt.

Eine bevorzugte Anordnung zur Verbindung einer zweiten Art Längsprofile, insbesondere in Form von H-, I-, oder Doppel-T-Profilen, aber auch von U-, C- oder Hut-Profilen, mit der Rohrwandung der Turmsektion erfolgt derart, dass die Längsprofile mit ihrem Steg zur Innenwandung einer Turmsektion gerichtet angeschweißt sind. Bei dem Gebrauch eines zum Turminneren hin offenen Längsprofils, bei dem der Steg von der Innenwandung einer Turmsektion beabstandet ist bzw. einem H-Profil, kann die Breite des Schlitzes im Steg vorteilhaft so gewählt sein, dass bei einer späteren Montage der Sektionssegmente Distanzelemente verzichtbar sind, da die Stegstirnseiten gegeneinander gezogen werden und somit die Funktion der Distanzelemente übernehmen, wodurch sich eine vorteilhafte Reduzierung der Montagezeiten auf der Baustelle ergibt.

Es hat sich als vorteilhaft herausgestellt, dass die auf die Turmlängsrichtung bezogene Länge der Längsprofile in einem Sektionsabschnitt größer als die Länge des Sektionsabschnitts ist, weil dadurch die horizontalen Schweißnähte zur Verbindung der Sektionsabschnitte überbrückt werden.

Der erfindungsgemäße Stahlrohrturm bietet zeitliche und wirtschaftliche Einsparungen bei Türmen mit großem Durchmesser, zudem stehen Windenergieanlagen mit den erfindungsgemäßen Stahlrohrtürmen schnell zur Energiegewinnung zur Verfügung. Ein weiterer zeitsparender Aspekt bei der Nutzung von Sektionssegmenten liegt darin, dass diese zweckmäßigerweise mit insbesondere sich längserstreckenden Einbauten, beispielsweise Komponenten für eine Befahranlage, Leiterabschnitten und/oder Kabelhalteeinrichtungen und/oder Stromschienen, versehen werden können, bevor die Sektionssegmente zum Montageort transportiert werden. Ein weiterer Vorteil der Sektionssegmente liegt darin, dass diese einfacher, insbesondere mit kleineren Beschichtungsanlagen oberflächenbeschichtet und/oder lackiert werden können, bevor diese zum Montageort transportiert werden.

In einer Weiterbildung des erfindungsgemäßen Verfahrens wird jeweils ein Längsprofil an dem Rohrkörper oder der Turmsektion entlang der geplanten Trennlinie innen auf die Rohrwandung geschweißt. Das Längsprofil wird beim Durchtrennen der Turmsektion und des/der Ringflansche mitdurchtrennt und bildet anschließend zwei Schenkel, über die die durchtrennten Sektionssegmente wieder miteinander verbunden werden. Beim Verbinden der Sektionssegmente kann zwischen den Schenkeln ein Distanzstück angeordnet sein. Das Längsprofil ist derart an die Turmwandung geschweißt, dass nach dem Durchtrennen jeder Schenkel mit seinem Sektionssegment verbunden ist.

Bei dem erfindungsgemäßen Verfahren wird der Rohrkörper mittels eines Hebezeugs oder eines Flurförderzeugs oberhalb wenigstens einer bewegbaren Schneideinrichtung derart verbracht und auf Stützmitteln einer Halteeinrichtung abgesetzt, dass die erste geplante Trennlinie in 6-Uhr-Position, also nach unten gerichtet, positioniert ist. Entsprechend der Positionen der Ziffern 6 und 12 auf einem Zifferblatt einer Uhr bezeichnen die 6-Uhr-Position die tiefste, die 12-Uhr-Position die höchste Position des auf den Stützmitteln liegenden Rohrkörpers.

In einer besonders bevorzugten Durchführung des Verfahrens werden mit einem nachfolgenden Schritt die Ringflansche der Turmsektion stirnseitig mit einem Aufnahmerad verbunden, insbesondere verschraubt, wobei die Aufnahmeräder vorzugsweise rotierbar auf einer Halteeinrichtung angeordnet sind, um in eine gewünschte Position gedreht zu werden. Mittels der Aufnahmeräder und der Halteeinrichtung lässt sich die Turmsektion oder der Rohrkörper besonders schonend drehen, d. h., ohne dass sich an der Außenhülle der Turmwandung Spuren von Laufrollen abzeichnen, wie dieses beispielsweise bei Rollenbetten der Fall sein könnte.

In einer weiteren besonders bevorzugten Durchführung des Verfahrens wird bereits der Rohrkörper zuvor oder später die vollständige Turmsektion mittels eines Hebezeugs oder eines Flurförderzeugs auf die Halteeinrichtung, die parallel und beabstandet zueinander angeordnete Balken aufweist, abgesetzt, wobei der Rohrkörper und/oder die Turmsektion so positioniert wird, dass eine erste geplante Trennlinie in 6-Uhr-Position im Wesentlichen mittig zwischen den parallelen und beabstandeten Balken der Halteeinrichtung verläuft.

Mit einem weiteren bevorzugten nachfolgenden Schritt des erfindungsgemäßen Verfahrens wird wenigstens eine bewegbare Schneideinrichtung mit einem Schneidwerkzeug benachbart zu einem ersten Ringflansch in eine Startposition bewegt und anschließend wird in einem weiteren Schritt das Schneidwerkzeug, insbesondere ein Scheibenfräser oder ein Sägeblatt unter Rotation mittels eines vertikal bewegbaren Werkzeugträgers mit dem ersten Ringflansch an der ersten vorbestimmten Position in Eingriff gebracht.

In einer besonders bevorzugten Durchführung des Verfahrens wird mit einem nachfolgenden Schritt der erste Ringflansch an der ersten vorbestimmten Position mit reduziertem Querschnitt mit dem Schneidwerkzeug durchtrennt und in einem direkt anschließenden Schritt wird das Schneidwerkzeug kontinuierlich entlang der ersten Trennlinie durch die Rohrwandung sowie das mit der Rohrwandung verbundene Längsprofil geführt, wobei bevorzugt aufgrund der gewählten Rotationsrichtung des Schneidwerkzeugs die anfallenden Späne nach unten abgeführt werden. In einer Fortsetzung der Bewegung wird das Schneidwerkzeug weiter entlang der ersten axialen Trennlinie durch die Rohrwandung nebst dem damit verbundenen Längsprofil und den zweiten Ringflansch am anderen Ende der Turmsektion geführt. Nachfolgend erfolgt ein Zurückbewegen des Schneidwerkzeugs in die Startposition, wobei hier bevorzugt kein Eingriff erfolgt. Mit dem erfindungsgemäßen Verfahren ist es möglich, den Schneidprozess automatisch über die gesamte Länge der Turmsektion, insbesondere ohne ein manuelles Umsetzen einer Schneidvorrichtung durchzuführen.

Nach dem Herstellen des ersten Längsschnittes werden die vorstehend beschriebenen Schritte entsprechend der Anzahl der vorgesehenen Längsschnitte wiederholt, wobei jeweils zwischen zwei Schnitten ein Drehen der Turmsektion um ihre Längsachse, z. B. um 120°, vorzugsweise mittels der drehbaren Aufnahmeräder an der Halteeinrichtung erfolgt, sodass die nächste geplante Trennlinie wieder in der 6-Uhr-Position positioniert ist.

Sind schließlich die erforderlichen Schnitte erfolgt, so werden die geschnittenen Sektionssegmente durch die endseitig angeordneten Aufnahmeräder zusammengehalten. Nachfolgend erfolgen ein Lösen des Sektionssegments von den Aufnahmerädern, ein Heben und Absetzen des Sektionssegments auf ein Transportmittel, Abtransportieren des Sektionssegments, vorzugsweise zu einer nachgeordneten Bearbeitungsanlage, insbesondere eine Beschichtungs- und/oder Lackieranlage.

Nachstehend sind Ausführungsbeispiele des Stahlturmes, insbesondere eine Turmsektion gemäß der Erfindung unter Bezugnahme auf die beigefügten Zeichnungen beschrieben, in denen
- Fig. 1: eine perspektivische Gesamtansicht einer Windenergieanlage,
- Fig. 2: eine Perspektivansicht einer erfindungsgemäßen Turmsektion,
- Fig. 3a: eine Querschnittsansicht eines erfindungsgemäßen vertikalen Längsprofils einer ersten Ausbildung in einer ersten Herstellungsphase,
- Fig. 3b: eine Querschnittsansicht des erfindungsgemäßen vertikalen Längsprofils aus Fig. 3a in einer zweiten Herstellungsphase,
- Fig. 3c: eine Querschnittsansicht des erfindungsgemäßen vertikalen Längsprofils aus Fig. 3a in einer dritten Herstellungsphase,
- Fig. 4a: eine Querschnittsansicht eines erfindungsgemäßen vertikalen Längsprofils einer zweiten Ausbildung in einer ersten Herstellungsphase,
- Fig. 4b: eine Querschnittsansicht eines erfindungsgemäßen vertikalen Längsprofils aus Fig. 4a in einer zweiten Herstellungsphase,
- Fig. 4c: eine Querschnittsansicht eines erfindungsgemäßen vertikalen Längsprofils aus Fig. 4a in einer dritten Herstellungsphase,
- Fig. 5: eine Querschnittsansicht eines erfindungsgemäßen vertikalen Längsprofils in einer dritten Ausbildung,
- Fig. 6: eine Draufsicht eines T-Ringflansches,
- Fig. 7: einen vergrößerten Ausschnitt des T-Ringflansches aus Fig. 6,
- Fig. 8: eine Querschnittsansicht des T-Ringflansches aus Fig. 6,
- Fig. 9: einen vergrößerter Ausschnitt eines L-Ringflansches,
- Fig. 10: eine Querschnittsansicht des L-Ringflansches aus Fig. 9,
- Fig. 11: einen vergrößerten Ausschnitt eines L-Ringflansches und einer Adapterplatte,
- Fig. 12: eine Querschnittsansicht des L-Ringflansches und der Adapterplatte aus Fig. 11,
- Fig. 13: eine perspektivische Gesamtansicht einer Turmsektion in einer Bearbeitungsstation,
- Fig. 14: eine perspektivische Ansicht einer Schneideinrichtung und
- Fig. 15a-c: eine Querschnittsansicht eines erfindungsgemäßen vertikalen Längsprofils in einer Ausbildung ohne Steg in drei verschiedenen Herstellungsphasen zeigen.

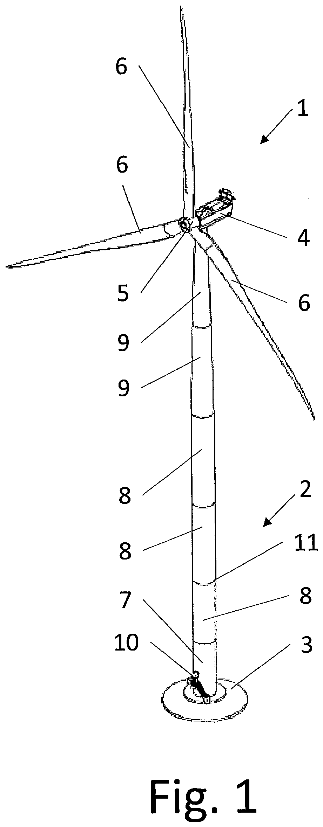

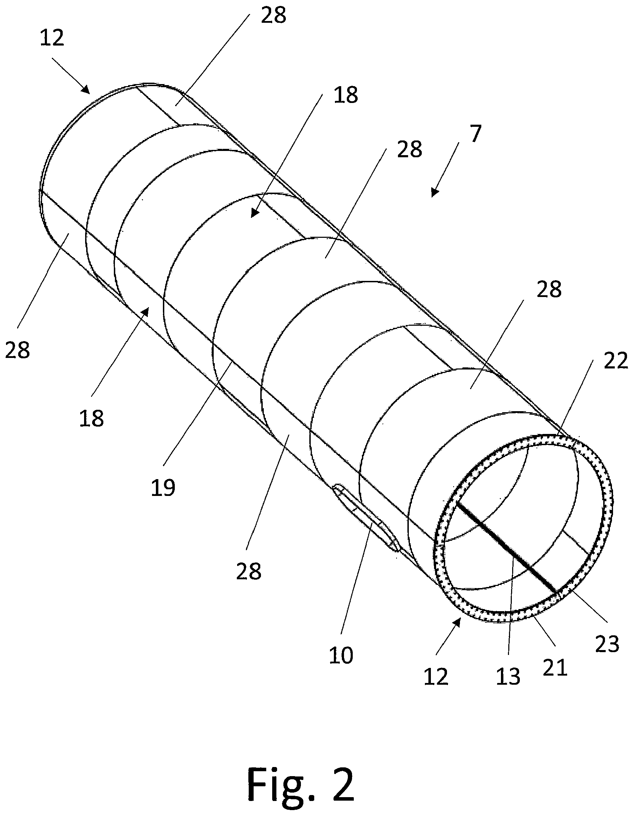

Fig. 1 zeigt eine Windenergieanlage 1 mit einem Turm, der als Stahlrohrturm 2 aus einer Anzahl gleicher und unterschiedlicher Turmsektionen 7, 8, 9 aufgebaut ist, wobei die unterste Turmsektion 7 in Fig. 2 detailliert dargestellt ist. Der Stahlrohrturm 2 trägt eine um eine vertikale Turmlängsachse drehbar gelagerte Gondel 4. In der Gondel 4 ist ein nicht dargestellter Antriebsstrang mit einer Hauptwelle, einem Getriebe und einem Generator gelagert. Die Hauptwelle steht in Wirkverbindung mit einer Rotornabe 5, an der drei Rotorblätter 6 um ihre Längsachse drehbar gelagert sind. Der Stahlrohrturm 2 umfasst neben der untersten Turmsektion 7, weitere Turmsektionen 8, 9, wobei die unteren Turmsektionen 7, 8, d. h., die mit größerem Durchmesser, aus lösbar verbunden Sektionssegmenten 18 bestehen, während die oberen Turmsektionen 9, d. h., die mit geringerem Durchmesser, als in Umfangsrichtung einstückige Sektionen ausgebildet sind.

Fig. 2 zeigt die untere Turmsektion 7 mit der Turmzugangstüröffnung 10. Die vorgefertigte Turmsektion 7 umfasst eine Anzahl von Sektionsabschnitten 28, die in Fachkreisen auch als "Schüsse" oder "cans" bezeichnet werden. Die Sektionsabschnitte 28 weisen vom Herstellungsprozess regelmäßig eine Längsschweißnaht auf. Weitere Turmsektionen 8 sind, ohne Turmzugangstüröffnung 10, entsprechend aufgebaut, wobei die Anzahl der Sektionsabschnitte 28 variieren kann. Im gezeigten Ausführungsbeispiel weist die Turmsektion 7 insgesamt neun Sektionsabschnitte 28 auf, welche an ihren Stirnseiten miteinander verschweißt sind. Die freien Stirnseiten der äußeren Sektionsabschnitte 28 einer Sektion sind jeweils mit einem Ringflansch 12 verschweißt. In einer vorteilhaften, nicht dargestellten Abwandlung werden die Ringflansche 12 bereits zuvor jeweils mit einem senkrecht angeordneten Sektionsabschnitt 28 verschweißt, bevor dieser mit den übrigen Sektionsabschnitten 28 verschweißt wird. Es ist bekannt, anstelle geschlossener Ringflansche einzelne Ringflanschsegmente an die freien Stirnseiten der äußeren Sektionsabschnitte einer Turmsektion anzuschweißen, was jedoch einen erhöhten Aufwand an Ausrichtarbeiten erfordert.

Wie die Figur 2 weiter erkennen lässt ist, sind die einzelnen Sektionsabschnitte 28 zueinander um ihre Längsachse derart verdreht, dass ihre Längsschweißnähte stets um einen Versatzwinkel gegeneinander versetzt sind, sodass die Längsschweißnähte benachbarter Sektionsabschnitte 28 nicht in einer Linie fluchten. Die Summe der Versatzwinkel ergibt bevorzugt 360° oder ein ganzzahliges Vielfaches davon. Die Fig. 2 zeigt ferner ein erstes Längsprofil 13 etwa in der 5-Uhr-Position, welches sich an der Innenseite der Wandung der Turmsektion 7 parallel zu deren Mittelachse erstreckt und mit der Wandung verschweißt ist. Neben dem gezeigten Längsprofil 13 weist die Turmsektion 7 zwei weitere, von außen nicht sichtbare Längsprofile 13 auf, die jeweils um 120° versetzt in der Rohrwandung angeordnet sind. In einem nachfolgenden Herstellungsschritt wird die Turmsektion 7 entlang einer ersten, zweiten und dritten geplanten Trennlinie 19 in drei Sektionssegmente 18 geteilt, wobei die geplanten Trennlinien 19 jeweils mit den Längsprofilen 13 zusammenfallen. Mit anderen Worten erfolgt der jeweilige Längsschnitt durch das Längsprofil 13, so dass die Sektionsegmente nachfolgend wieder über das Längsprofil miteinander verbunden werden können.

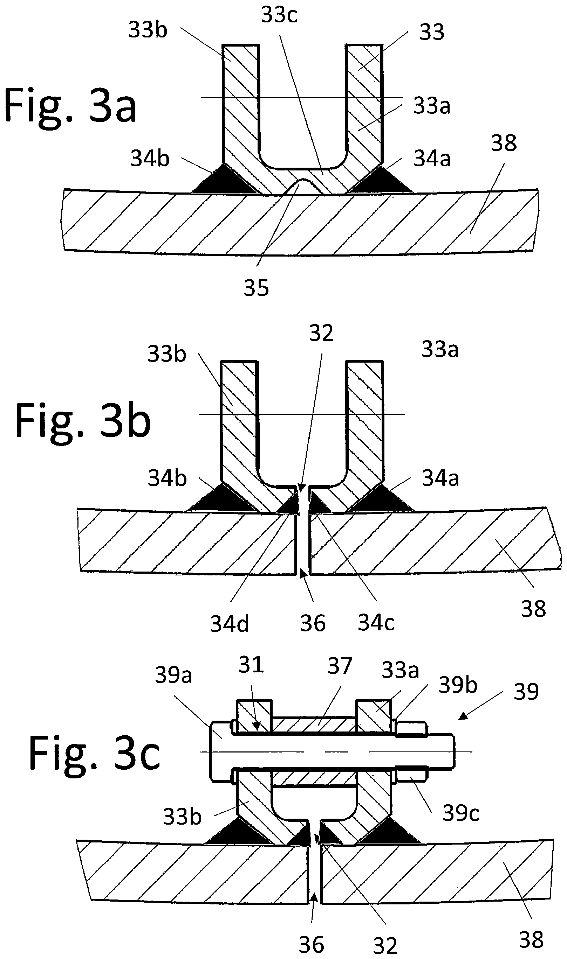

Die Fig. 3a, 3b, 3c zeigen ein mögliches Längsprofil 13 in Form eines U-Profils 33, welches gleichlange planparallele Schenkel 33a, 33b und einen die Schenkel miteinander verbindenden Steg 33c aufweist, in drei aufeinanderfolgenden Herstellungsschritten. Das U-Profil 33 wird zunächst mit seinem Steg 33c beidseitig durch die Schweißnähte 34a und 34b mit der noch ungeteilten Rohrwandung 38 verschweißt, wobei lediglich ein Ausschnitt der Rohrwandung 38 gezeigt ist. Der Steg 33c weist weiterhin auf der der Rohrwandung 38 zugewandten Seite eine Hohlkehle 35 auf, die zwei Funktionen erfüllt: Erstens wird eine vorteilhafte Querschnitts- und damit Materialreduzierung für einen nachfolgenden Längsschnitt erreicht, wobei ein erster Schlitz 36 in der Rohrwandung 38 der Turmsektion 7, 8 und ein zweiter Schlitz 32 im Steg 33c des U-Profils 33 erzeugt werden, vgl. Fig. 3b. Die Schlitze 36 und 32 werden bevorzugt in einem gemeinsamen Trennvorgang hergestellt. Jeder der Schlitze 32, 36 besitzt nach dem Durchtrennen ein Paar einander zugewandter Trennabschnitte, in denen die Trennung erfolgte. Zweitens wird beidseitig der Schlitzkante eine Hohlkehle für eine weitere Schweißnaht 34c, 34d auf jeder Seite geschaffen. Im Rahmen der Montage am Errichtungsort werden schließlich die Sektionssegmente 18 mittels Verbindungsmitteln 39, insbesondere bestehend aus Gewindebolzen 39a, welche durch Durchgangsbohrungen 31 in den Schenkeln 33a, 33b des durchtrennten Längsprofils geführt sind, und Muttern 39c sicher verbunden. Distanzelemente 37 tragen dabei Sorge für einen vorbestimmten Abstand bzw. für die Schlitzbreiten 32, 36, wie die Fig. 3c zeigt. Mit der Länge der Distanzelemente 37 lässt sich somit eine gewünschte Schlitzbreite 32, 36 vorteilhaft einstellen.

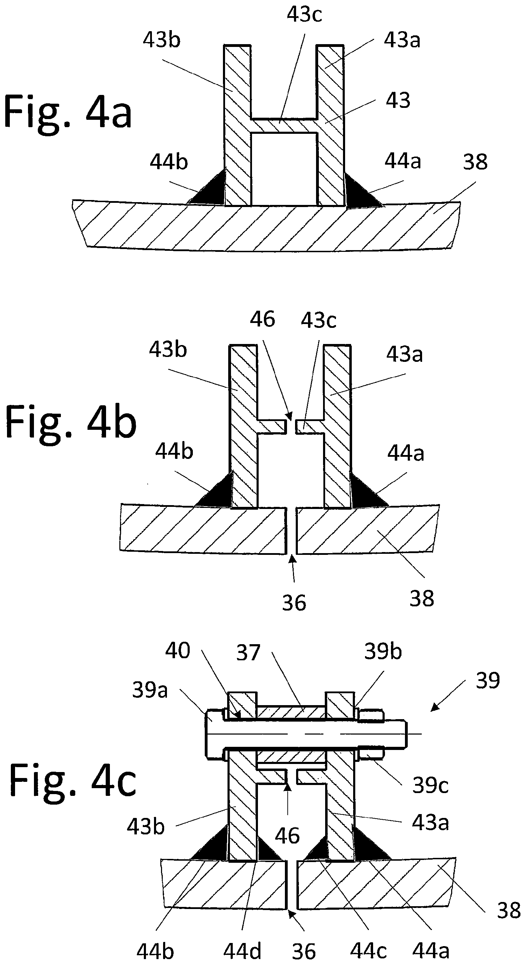

Die Fig. 4a, 4b, 4c zeigen eine weitere Anordnung aus Längsprofil 13 und Rohrwandung 38. Das Längsprofil 13 ist dort in Form eines H-Profils 43 ausgebildet, welches gleichlange planparallele Schenkel 43a, 43b und einen Steg 43c aufweist. Das H-Profil 43 wird zunächst beidseitig mit seinen Schenkeln 43a, 43b durch die Schweißnähte 44a und 44b mit der noch ungeteilten Rohrwandung 38 verschweißt. Die Fig. 4b zeigt die Anordnung bestehend aus dem Längsprofil 13 und der Rohrwandung 38 nach einem erfolgten Längsschnitt, wobei ein erster Schlitz 36 in der Rohrwandung 38 der Turmsektion 7, 8 und ein zweiter Schlitz 46 im Steg 43c des H-Profils 43 erzeugt wurden. Fig. 4c zeigt schließlich die im Rahmen der Montage am Errichtungsort durch Durchgangsbohrungen 40 der Schenkel 43a, 43b geführten Gewindebolzen 39a, Muttern 39c und Distanzelemente 37 und die somit sicher verbundenen Sektionssegmente 18, wobei wieder lediglich ein Ausschnitt der Rohrwandung 38 dargestellt ist.

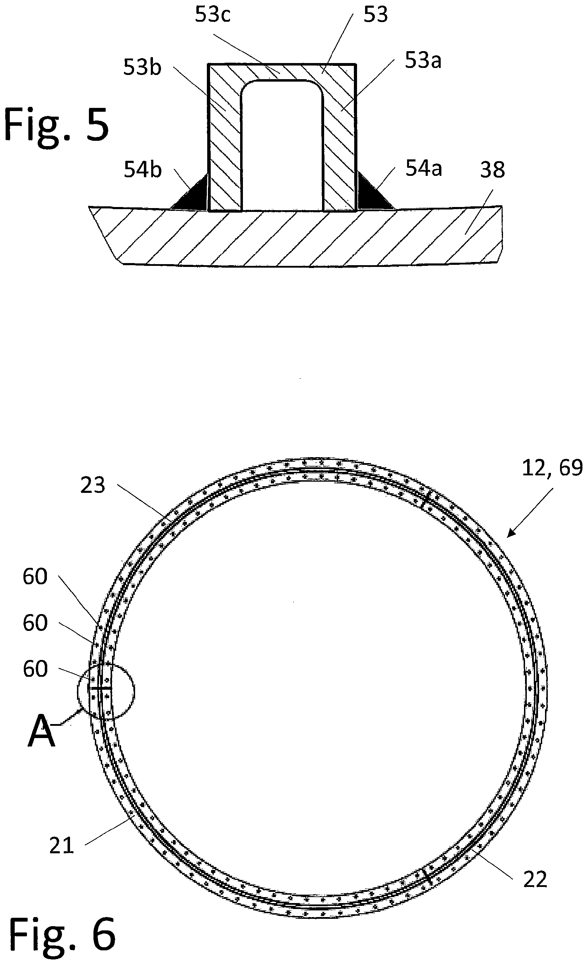

Die Fig. 5 zeigt ein Längsprofil 13 in Form eines weiteren U-Profils 53, welches jedoch gegenüber der Anordnung in Fig. 3a, 3b, 3c um seine Längsachse um 180° gedreht ist. Das U-Profil 53 wird im Gegensatz zum Ausführungsbeispiel gemäß Fig. 3a, 3b, 3c mit den Schenkeln 53a, 53b durch die Schweißnähte 54a und 54b mit der noch ungeteilten Rohrwandung 38 verschweißt. Die weiteren Herstellungsschritte sind im Wesentlichen wie in Fig. 4b und 4c dargestellt und wie dort beschrieben.

Eine nicht dargestellte weitere vorteilhafte Anordnung weist anstelle eines U-Profils 33 gemäß Fig. 3a, 3b, 3c ein nach oben offenes C-Profil auf. Das C-Profil hat im Gegensatz zum U-Profil 33 zwei nach innen gebogene rechtwinklige Verlängerungen der Schenkel, wobei die offenen Stirnflächen dieser Verlängerungen einander zugewandt sind und deren Abstand im Wesentlichen der Breite des Schlitzes im Steg entspricht. Das C-Profil hat den weiteren Vorteil, dass bei einer späteren Montage der Sektionssegmente 18 die Distanzelemente 37 verzichtbar sind, da die besagten Verlängerungen gegeneinander gezogen werden und somit die Funktion der Distanzelemente 37 übernehmen, wodurch sich eine vorteilhafte Reduzierung der Montagezeiten ergibt.

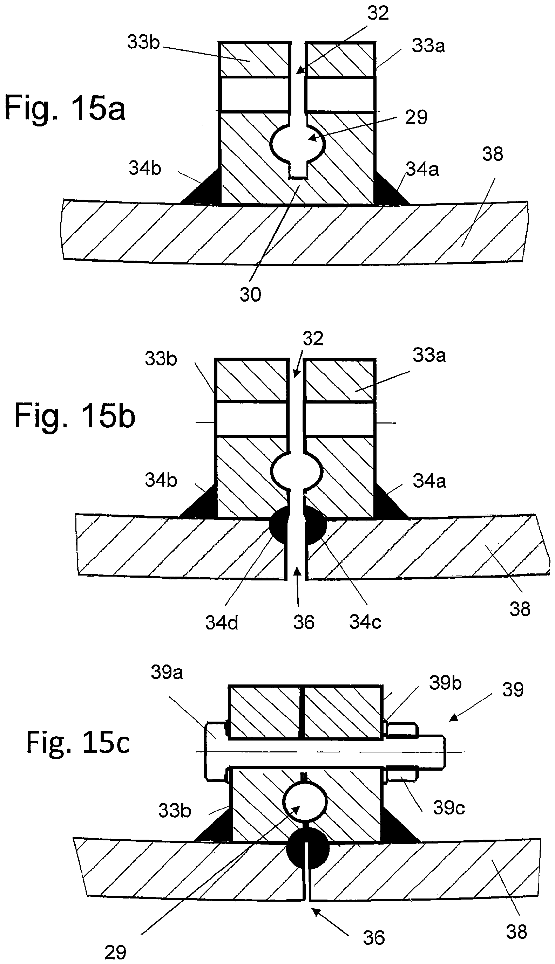

Neben den vorstehenden Profilen nach Fign 3, 4 und 5, die einen Steg aufweisen, der die Schenkel miteinander verbindet, zeigen Fig. 15a, 15b, 15c ein Längsprofil 30, das mit zwei seitlichen Schweißnähten 34a, 34b an die Rohrwandung geschweißt ist. Das Längsprofil 30 besitzt zwei Schenkel 33a, 33b, die durch eine Nut 32 voneinander getrennt sind. Die Nut 32 besitzt einen Nutgrund in dem Längsprofil 30. In der Nut ist eine Bohrung 29 vorgesehen, die sich in Längsrichtung des Längsprofils 30 erstreckt. Bei einem Durchtrennen der Turmwandung 38 im Bereich 36 wird auch der Nutgrund mit durchtrennt und die beiden Schenkel 33a, 33b sind unabhängig voneinander. Da die Breite des Trennschlitzes im Bereich 36 größer die Nutbreite 32 ist, bleiben die Schenkel ohne Stegabschnitte zurück. Auf den einander zugewandten Seiten der Schenkel tragen diese stattdessen Trennabschnitte, die durch das Durchtrennen der Turmwand und des Längsprofils gebildet werden. Die Schenkel 33a, 33b werden durch Schweißen an ihren einander zugewandten Seiten mit der Turmwandung 38 verbunden. Sollen die durchtrennten Sektionssegmente mit Hilfe des durchtrennten Längsprofils 30 wieder miteinander verbunden werden, so kann eine Ausrichtung durch einen Zentrierstift in der Bohrung 29 erfolgen. Durch den Zentrierstift werden die Schenkel 33a, 33b relativ zueinander ausgerichtet und können so über den Gewindebolzen 39a, die Unterlegscheibe 39b und die Mutter 39c aneinander befestigt werden.

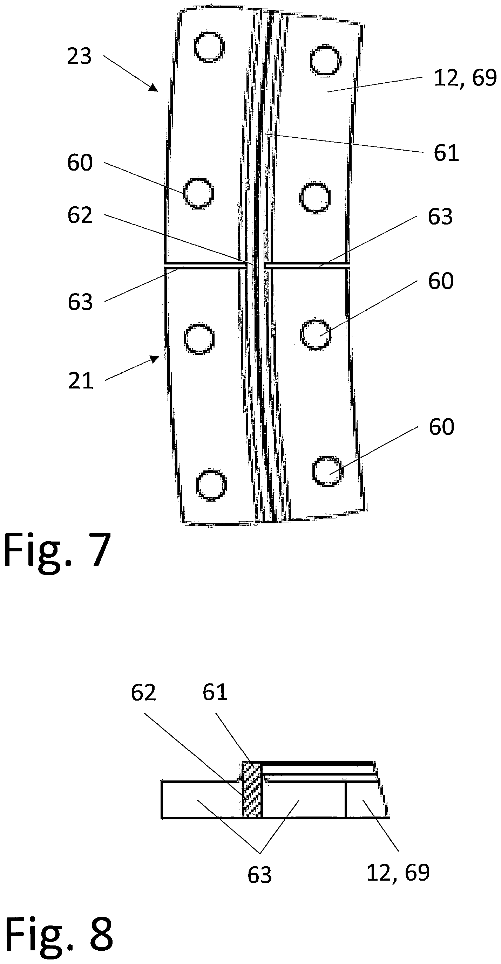

Die Fig. 6 zeigt eine Draufsicht eines Ringflansches 12 mit einem gekennzeichneten Detail "A". Die Fig. 7 zeigt einen vergrößerten Ausschnitt und die Fig. 8 eine Querschnittsansicht des Details "A". Der Ringflansch gemäß den Fign. 6, 7, 8 ist als T-Ringflansch 69 ausgeführt, welcher zum Anschluss der untersten Turmsektion 7 an das Fundament 3 und seine vorstehenden Ankerbolzen (nicht dargestellt) vorgesehen ist. Der T-Ringflansch 69 besitzt an vorbestimmten Positionen Teilungsabschnitte mit einer geringeren Materialstärke, an denen der Ringflansch in drei Ringflanschsegmente 21, 22, 23 teilbar ist. An jeder vorbestimmten Position eines Teilungsabschnitts ist der Querschnitt des T-Ringflansches 69 durch zwei Schlitze 63 reduziert, so dass lediglich eine schmale Segmentverbindung 62 verbleibt. Diese Segmentverbindung 62 wird später im Herstellungsprozess, nämlich erst nach dem Verschweißen des T-Ringflansches 69 mit einem Sektionsabschnitt 28 der Turmsektion 7 durchtrennt. Der T-Ringflansch 69 weist weiterhin eine Vielzahl von Durchgangsbohrungen 60 auf, die beidseitig des Stegs 61 in zwei konzentrischen Lochkreisen angeordnet sind.

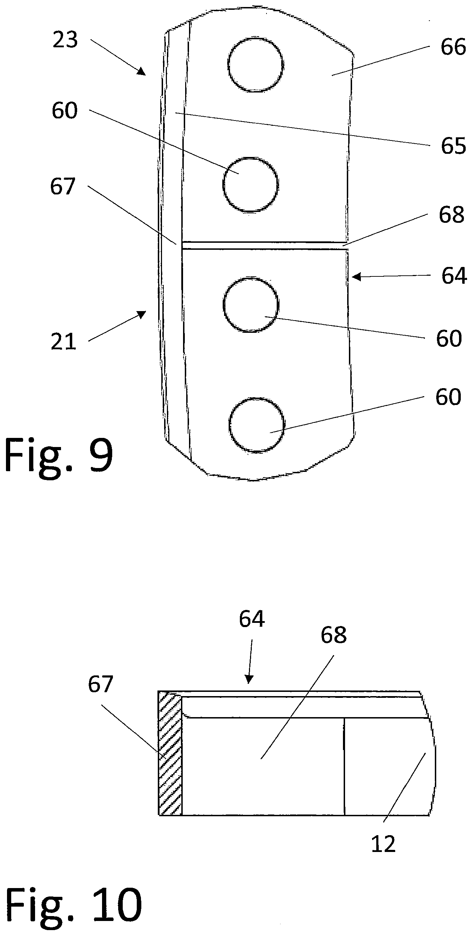

Zur Verbindung der Turmsektionen 7, 8, 9 untereinander sind Ringflansche 12 in Form von L-Ringflanschen 64 vorgesehen, die zwei rechtwinklig zueinander angeordnete Schenkel 65, 66 aufweisen, wie in Fig. 9, 10 dargestellt. Der erste, in Fig. 9 aus der Zeichenebene heraus gerichtete Schenkel 65 ist auf Stoß mit einem Sektionsabschnitt 28 der Turmsektion 7, 8 verschweißt und bildet somit einen Abschnitt der Außenhülle der Turmsektion 7, 8. Der zweite, in der Zeichenebene nach innen gerichtete Schenkel 66 weist eine Vielzahl von Durchgangsbohrungen 60 für Verbindungsmittel 39 auf, um den L-Ringflansch 64 mit dem angrenzenden L-Ringflansch 64 einer angrenzenden Turmsektion 7, 8 zu verbinden. Beide L-Ringflansche 64 bilden somit ein Ringflanschpaar. Wie die Fig. 9 und 10 wiederum erkennen lassen, ist der L-Ringflansch 64 an vorbestimmten Positionen mit Teilungsabschnitten ausgestattet, in denen der Ringflansch in drei Ringflanschsegmente 21, 22, 23 teilbar ist. An der vorbestimmten Position der Teilungsabschnitte ist der Querschnitt des L-Ringflansches 64 durch einen Schlitz 68 reduziert, wodurch eine schmale Segmentverbindung 67 besteht. Diese Segmentverbindung 67 wird später im Herstellungsprozess nach dem Verschweißen des L-Ringflansches 64 mit einem Sektionsabschnitt 28 durchtrennt. Die Segmentverbindung 67 bildet den Teilungsabschnitt für den L-Ringflansch 64.

Die Auswahl der Verbindungsmittel 39 ist dabei nicht auf Gewindebolzen 39a, Unterlegscheiben 39b und Muttern 39c beschränkt, sondern es sind vielmehr andere Verbindungsmittel, insbesondere Schraubverbindungen wie beispielsweise Gewindestangen mit beidseitig vorgesehen Muttern, Gewindehülsen mit beidseitig vorgesehen Gewindebolzen, etc. ebenfalls geeignet.

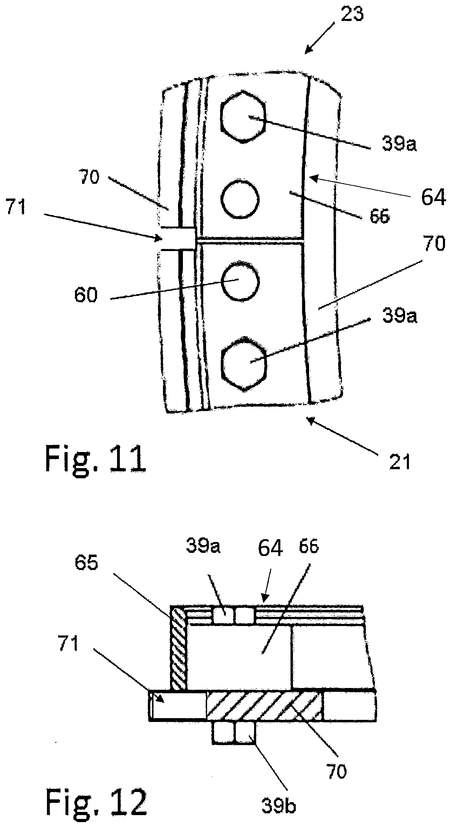

Die Fig. 11 zeigt eine Draufsicht und Fig. 12 eine Schnittansicht eines Ausschnitts einer an einem L-Ringflansch 64 einer Turmsektion montierten Adapterplatte 70, welche zum Anschluss oder Halterung der Turmsektion während einer weiteren Bearbeitung und insbesondere während eines Durchtrennens der Turmsektion dient. Der L- Ringflansch 64 ist durch eine Schraubverbindung, bestehend aus Gewindebolzen 39a und Muttern 39c, mit der Adapterplatte 70 verbunden. Die Adapterplatte 70 weist einen einseitigen Schlitz 71 zum Durchtritt eines Schneidwerkzeugs 99 auf. Nach einem Durchtrennen der Segmentverbindung 67 in dem Teilungsabschnitt bleiben die Ringflanschsegmente 21, 22, 23 mit der Adapterplatte 70 verbunden und sind somit in ihrer Lage fixiert.

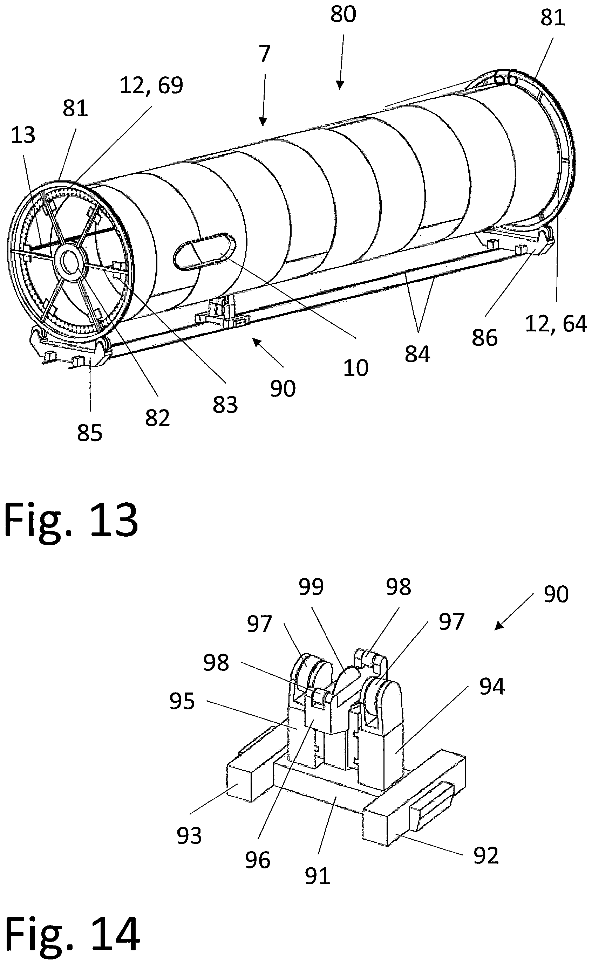

Die Fig. 13 zeigt eine perspektivische Gesamtansicht einer Turmsektion 7 in einer Halteeinrichtung 80 zum Längsschneiden von Turmsektionen in ihrer 6-Uhr-Position. Die Halteeinrichtung 80 umfasst zwei drehbare Aufnahmeräder 81, welche auf auf Schienen 84 geführten Rollenlagern 85, 86 abgestützt sind, wobei die Rollen der Rollenlager 85, 86 mittels Elektromotoren angetrieben sein können. Die drehbaren Aufnahmeräder 81 sind jeweils mit einem Ringflansch 12 an den Stirnseiten der Turmsektion 7, 8 direkt oder mittels einer Adapterplatte 70 verbunden. Die Aufnahmeräder 81 weisen eine Radnabe 82 auf, welche durch Speichen 83 mit einem Außenring verbunden ist. In einer nicht dargestellten Abwandlung können die Aufnahmeräder 81 anstatt auf Rollenlagern 85, 86 mittels Aufnahmedornen in der Radnabe 82 drehbar gelagert sein. Auf den Schienen 84 ist eine Schneideinrichtung 90 mittels eines Vorschubantriebs bewegbar angeordnet, wobei sich der Verfahrweg der Schneideinrichtung 90 über die gesamte Länge einer Turmsektion erstreckt.

Die Fig. 14 zeigt eine perspektivische Ansicht der Schneideinrichtung 90 zum Längsschneiden von Turmsektionen 7, 8 in 6-Uhr-Position. Die Schneideinrichtung 90 umfasst ein Schneidwerkzeug 99, das bevorzugt als Scheibenfräser oder Sägeblatt ausgebildet ist. Das Schneidwerkzeug 99 ist drehbar in einem vertikal verstellbaren Werkzeugträger 96 gelagert. Der Werkzeugträger 96 umfasst zudem Führungsrollen 98. Beidseitig des Schneidwerkzeugs 99 und des Werkzeugträgers 96 sind Stützrollen 97 nebst Stützrollenhubeinrichtungen 94, 95 vorgesehen, die eine stets gleiche Schnitttiefe des Schneidwerkzeugs 99 in das Material, insbesondere in die Rohrwandung 38 einer Turmsektion 7, 8 sicherstellen. Der Werkzeugträger 96 und die Stützrollenhubeinrichtungen 94, 95 sind auf einem Querträger 91 gehalten, welcher zwei Antriebsrahmen 92, 93 für zwei nicht dargestellte Vorschubantriebe verbindet. Die Vorschubantriebe treiben im Gleichlauf die Antriebsräder an, welche auf den Schienen 84 geführt sind.

Ein nicht dargestelltes Ausführungsbeispiel weist separate höhenverstellbare Stempel zum Anheben der in der Halteeinrichtung gelagerten Turmsektion zwecks Kompensation einer Durchbiegung auf, welche aus der Gewichtskraft der gelagerten Turmsektion zwischen ihren Auflagerpunkten resultiert. Um die Stempel in der Höhe optimal - im Sinne einer geraden Schnittlinie - zu positionieren, ist wenigstens ein optischer Sensor vorgesehen, der in einen Regelkreis für eine Regelung der Stempelhöhe eingebunden ist. Die Schneideinrichtung 90 ist mittels wenigstens eines Vorschubantriebs bewegbar auf Schienen gelagert und geführt. Durch die von der Schneideinrichtung 90 unabhängigen Stempel wird die Belastung der Schneideinrichtung, insbesondere um die nicht aufzunehmende Gewichtskraft, erheblich reduziert. Die Schneideinrichtung gemäß diesem zweiten Ausführungsbeispiel kann aufgrund der Funktionstrennung gegenüber der Schneideinrichtung 90 im Ausführungsbeispiel gemäß Fig. 13 und Fig. 14 einfacher ausgebildet sein, insbesondere sind die dort gezeigten Stützrollen 97 nebst Stützrollenhubeinrichtung 94, 95 verzichtbar. Ein weiterer Vorteil besteht darin, dass die Vorschubantriebe der Schneideinrichtung 90 lediglich eine Leistung entsprechend der Vorschub-/Schnittkraft aufbringen müssen.

Eine weitere nicht dargestellte, besonders vorteilhafte Stützvorrichtung weist als Lagerbett für eine zu bearbeitende Turmsektion 7, 8 zwei beabstandete, horizontal angeordnete Träger auf, welche paarweise angeordnet schräge oder konkave Aufnahmen aufweisen. Der Abstand der Träger ist größer als die größte Breite der Schneideinrichtung, so dass diese auf den Schienen unterhalb der Turmsektion frei bewegbar ist, wobei die Schienen vorzugsweise in einem Kanal im Boden quasi unterflur verlegt sind. Die Schneideinrichtung ist durch wenigstens einen Vorschubantrieb antreibbar. Diese Schneideinrichtung kann wiederum gegenüber der Schneideinrichtung 90 gemäß dem Ausführungsbeispiel in den Figuren 13 und 14 einfacher ausgebildet sein, insbesondere sind die dort gezeigten Stützrollen 97 nebst Stützrollenhubeinrichtung 94, 95 verzichtbar. Ein weiterer Vorteil besteht darin, dass die Vorschubantriebe der Schneideinrichtung 90 lediglich für eine Leistung entsprechend der Vorschub- und Schnittkraft ausgelegt sein müssen, da diese keine Stützlastkomponente überwinden müssen.

### Bezugszeichenliste

- 1: Windenergieanlage
- 2: Stahlrohrturm
- 3: Fundament
- 4: Gondel
- 5: Rotornabe
- 6: Rotorblatt
- 7, 8, 9: Turmsektion
- 10: Turmzugangstüröffnung
- 11: Sektionstrennung
- 12: Ringflansch
- 13: Längsprofil
- 18: Sektionssegment
- 19: Trennlinie
- 21, 22, 23: Ringflanschsegment
- 28: Sektionsabschnitt
- 29: Bohrung
- 31: Bohrung
- 32, 36: Schlitz
- 33, 53: U-Profil
- 33a, 33b: Schenkel
- 33c, 53c: Steg
- 34a, 34b, 54a, 54b: Schweißnaht
- 34c, 34d: Schweißnaht
- 35: Hohlkehle
- 37: Distanzelement
- 38: Rohrwandung
- 39: Verbindungsmittel
- 39a: Gewindebolzen
- 39b: Unterlegscheibe
- 39c: Mutter
- 40, 60: Durchgangsbohrung
- 43: H-Profil
- 43a, 43b: Schenkel
- 43c: Steg
- 44a, 44b, 44c, 44d: Schweißnaht
- 46: Schlitz
- 61: Steg
- 62, 67: Segmentverbindung
- 63, 68: Schlitz
- 64: L-Ringflansch
- 65, 66: Schenkel
- 69: T-Ringflansch
- 70: Adapterplatte
- 80: Bearbeitungsstation
- 81: Aufnahmerad
- 82: Radnabe
- 83: Speiche
- 84: Schiene
- 85, 86: Rollenlager
- 90: Trenneinrichtung
- 91: Querträger
- 92, 93: Antriebsrahmen
- 94, 95: Stützrollenhubeinrichtung
- 96: Werkzeugträger
- 97: Stützrolle
- 98: Führungsrolle
- 99: Schneidwerkzeug

## Patentansprüche

1. Stahlturm (2) für eine Windenergieanlage (1), der eine Mehrzahl von zylindrischen und/oder konischen in Turmlängsrichtung übereinander angeordneten Turmsektionen (7, 8, 9) umfasst, welche mittels horizontal verlaufender Ringflansche (12) miteinander verbunden sind, wobei wenigstens eine Turmsektion (7, 8) mindestens zwei Sektionsabschnitte (28) umfasst, die entlang ihrer aneinander angrenzenden, horizontalen und ringförmigen Stirnseiten zusammengeschweißt sind und entlang der freien obersten und untersten Stirnseite jeweils mit einem horizontalen Ringflansch (12) verschweißt sind und wobei die wenigstens eine Turmsektion (7, 8) in mehrere Sektionssegmente (18) unterteilt ist, die durch Längsprofile (13) und Verbindungsmittel (39) zu einer umlaufenden Turmsektion (7, 8) miteinander verbunden sind, **dadurch gekennzeichnet, dass** mindestens einer der Ringflansche (12) wenigstens zwei Teilungsabschnitte aufweist, in denen der Ringflansch (12) in Ringflanschsegmente (21, 22, 23) geteilt ist, wobei der mindestens eine Ringflansch (12) vor einer Trennung der Sektionssegmente einen einstückigen Ringflansch bildet.

2. Stahlturm (2) nach Anspruch 1, **dadurch gekennzeichnet, dass** jedes Sektionssegment (18) einer Turmsektion (7, 8) an seiner oberen und unteren Stirnseite jeweils ein Ringflanschsegment (21, 22, 23) aufweist.

3. Stahlturm (2) nach Anspruch 1 oder 2, **dadurch gekennzeichnet, dass** wenigstens ein Ringflansch (12) als ein T-Ringflansch (69) ausgebildet ist, welcher einen ringförmigen Steg und beidseitig von diesem abstehende Flanschabschnitte umfasst, die eine Vielzahl von in konzentrischen Lochkreisen angeordneten Durchgangsbohrungen (60) aufweisen, wobei im nicht geteilten Zustand die abstehenden Flanschabschnitte in wenigstens zwei Positionen in ihrem Querschnitt jeweils durch einen ersten und/oder einen zweiten Schlitz (63) zur Bildung der Teilungsabschnitte reduziert sind.

4. Stahlturm (2) nach Anspruch 3, **dadurch gekennzeichnet, dass** sich der erste Schlitz (63) vom äußeren Umfang des ringförmigen Flanschabschnitts radial nach innen erstreckt und der zweite Schlitz (63) sich vom inneren Umfang des kreisringförmigen Flanschabschnitts radial nach außen erstreckt, sodass lediglich eine Segmentverbindung (62) in Verlängerung des Stegs (61) verbleibt.

5. Stahlturm (2) nach einem der Ansprüche 1 bis 4, **dadurch gekennzeichnet, dass** wenigstens ein Ringflansch (12) als ein L-Ringflansch (64) ausgebildet ist, welcher einen ringförmigen horizontalen Flanschabschnitt, der eine Vielzahl von Durchgangsbohrungen (60) die auf einem Lochkreis liegen, und einen ringförmigen vertikalen Flanschabschnitt umfasst, wobei im nicht geteilten Zustand in wenigstens zwei Positionen der Querschnitt des horizontalen Flanschabschnitts jeweils durch einen Schlitz (68) zur Bildung der Teilungsabschnitte reduziert ist.

6. Stahlrohrturm (2) nach einem der Ansprüche 1 bis 5, **dadurch gekennzeichnet, dass** das Längsprofil (13) zwei parallel zueinander verlaufende Schenkel aufweist, die jeweils an die Turmwandung angeschweißt sind.

7. Stahlturm (2) nach einem der Ansprüche 1 bis 6, **dadurch gekennzeichnet, dass** das vertikale Längsprofil (13) zwei parallel zueinander verlaufende und jeweils mit einem Steg verbundene Schenkel (43a, 43b, 53a, 53b) aufweist, wobei die Schenkel und/oder der Steg an die Innenwandung der Turmsektion (7, 8) angeschweißt sind.

8. Verfahren zur Herstellung eines Stahlturms (2) für eine Windenergieanlage (1), mit folgenden Schritten:
- Herstellen eines Sektionsabschnitts (28) für eine Turmsektion (7, 8), wobei zunächst Stahlblech ringförmig gebogen und entlang einer Längskante zu einem geschlossenen Sektionsabschnitt (28) verschweißt wird,
- Verschweißen einer Mehrzahl von Sektionsabschnitten (28) entlang ihrer in Umfangsrichtung verlaufenden Stirnseiten zu einem Rohrkörper, **gekennzeichnet durch**
- Ausrichten eines umlaufenden Ringflansches (12) an einer der Stirnflächen des Rohrkörpers und/oder einem noch nicht zum Rohrkörper verschweißten Sektionsabschnitt (28) und
- Anschweißen des ausgerichteten Ringflansches (12) zur Bildung der Turmsektion, wobei der Ringflansch (12) an vorbestimmten Positionen jeweils einen Teilungsabschnitt mit einem reduzierten Querschnitt aufweist und die Teilungsabschnitte jeweils mit einer geplanten Trennlinie (19) zusammenfallen, und
- Durchtrennen der Turmsektion mit Ringflansch (12) entlang der Trennlinie (19) in Sektionssegmente und nachfolgendes Verbinden der durchtrennten Sektionssegmente (18) zu der Turmsektion (7, 8) des Stahlturms (2).

9. Verfahren nach Anspruch 8, **gekennzeichnet durch**:
- Aufschweißen jeweils eines Längsprofils an dem Rohrkörper und/oder dem Sektionsabschnitt entlang der geplanten Trennlinien (19) innen auf die Rohrwandung (38), wobei beidseitig des oder jedes Längsprofils (13) Schweißnähte vorgesehen sind und die geplante Trennlinie (19) zwischen den Schweißnähten verläuft.

10. Verfahren nach Anspruch 9, **dadurch gekennzeichnet, dass** der Rohrkörper mittels eines Hebezeugs oder eines Flurförderzeugs oberhalb wenigstens einer bewegbaren Schneideinrichtung (90) derart verbracht und auf eine Halteeinrichtung abgesetzt wird, dass eine erste geplante Trennlinie (19) in 6-Uhr-Position positioniert ist.

11. Verfahren nach Anspruch 10, **gekennzeichnet durch** einen weiteren Verfahrensschritt, bei dem jeder Ringflansch (12) der Turmsektion (7, 8) stirnseitig mit einem Aufnahmerad (81) verbunden ist, um auf der Halteeinrichtung in die gewünschte Position gedreht zu werden.

12. Verfahren nach Anspruch 10 oder 11, **dadurch gekennzeichnet, dass** die Halteeinrichtung parallel und beabstandet verlaufende Balken aufweist, wobei der Rohrkörper und/oder die Turmsektion (7, 8) so an der Halteeinrichtung positioniert wird, dass die erste Trennlinie (19) in 6-Uhr-Position zwischen den Balken verläuft.

13. Verfahren nach einem der Ansprüche 10 bis 12, **dadurch gekennzeichnet, dass** wenigstens eine bewegbare Schneideinrichtung (90) mit einem Schneidwerkzeug (99) benachbart zu einem ersten Ringflansch (12) in eine Startposition bewegt und anschließend das Schneidwerkzeug (99) mittels eines vertikal bewegbaren Werkzeugträgers (96) mit dem ersten Ringflansch (12) an der ersten vorbestimmten Position in Eingriff gebracht wird.

14. Verfahren nach Anspruch 13, **dadurch gekennzeichnet, dass** mit dem Schneidwerkzeug (99) der erste Ringflansch (12) an einer ersten vorbestimmten Position mit reduziertem Querschnitt und nachfolgend entlang der ersten Trennlinie (19) durch die Rohrwandung (38) durchtrennt wird.

15. Verfahren nach Anspruch 14, **gekennzeichnet durch** den weiteren Schritt:
- Drehen der Turmsektion (7, 8) um einen vorbestimmten Winkelbetrag um ihre Längsachse, sodass eine geplante zweite Trennlinie in der 6-Uhr-Position positioniert ist.

16. Verfahren nach Anspruch 15, **gekennzeichnet durch** den nachfolgenden Schritt:
- Durchtrennen des ersten Ringflanschs (12) an einem zweiten Trennabschnitt und der Rohrwandung (38) entlang der zweiten Trennlinie (19).
